# FASCICULE DE BREVET EUROPEEN

(11) **EP 3 956 555 B1**
(45) Date de publication et mention de la délivrance du brevet: **29.05.2024**
(21) Numéro de dépôt: 20727832.6
(22) Date de dépôt: 17.04.2020
(51) Int. Cl.: F02C 7/36, F16H 57/04

(54) **REDUCTEUR DE VITESSE D'UNE TURBOMACHINE**
REDUKTIONSGETRIEBE EINER TURBOMASCHINE
REDUCTION GEARBOX OF A TURBOMACHINE

(30) Priorité: 19.04.2019 FR 1904224
(43) Date de publication de la demande: 23.02.2022
(73) Titulaire: SAFRAN AIRCRAFT ENGINES, 75015 Paris (FR)
(72) Inventeur: BECOULET, Julien, Fabien, Patrick, 77550 MOISSY-CRAMAYEL (FR); BARET, Emmanuel, Fabrice, Marie, 77550 MOISSY-CRAMAYEL (FR); BOSCO, Franck, Emmanuel, 77550 MOISSY-CRAMAYEL (FR); BRAULT, Michel, Gilbert, Roland, 77550 MOISSY-CRAMAYEL (FR); LEVISSE, Paul, Ghislain, Albert, 77550 MOISSY-CRAMAYEL (FR)
(74) Mandataire: Gevers & Orès
(86) Numéro de dépôt international: PCT/FR2020/000136
(87) Numéro de publication internationale: WO 2020/212666

(56) Documents cités:
- EP-A1- 3 453 924
- WO-A1-2013/124590
- FR-A1- 2 987 417
- FR-A1- 3 065 268
- GB-A- 947 789

## Description

### Domaine technique de l'invention

La présente invention concerne le domaine des réducteurs de vitesse pour turbomachine, en particulier d'aéronef.

### Arrière-plan technique

L'état de la technique comprend notamment le document EP-A1-3453924. Les turbomachines actuelles, notamment les turboréacteurs ou turbopropulseurs comportant une ou plusieurs hélices ou soufflante générant un flux primaire et un flux secondaire, comprennent un système de transmission, appelé réducteur. Ce réducteur entraîne cette ou ces hélices ou soufflante à la bonne vitesse de rotation à partir de l'arbre de la turbine basse pression du corps primaire de la turbomachine, tout en tenant en compte de leurs architectures particulières (telles que le taux de dilution). Le fonctionnement des réducteurs, en particulier sur des turboréacteurs avec soufflante à fort taux de dilution, nécessite un débit de lubrifiant ou huile de lubrification particulièrement important pour assurer la lubrification et le refroidissement des différents organes de ceux-ci, tels que leurs pignons et paliers, ainsi que la dissipation d'une importante puissance. Le débit du lubrifiant est fonction de l'architecture et est par exemple de l'ordre de 6000 à 7000 litres par heure au décollage pour une architecture particulière. Parmi les réducteurs utilisés (également désignés par le terme anglais « Réduction Gear Box » siglé RGB), on trouve les trains planétaires et épicycloïdaux. De tels réducteurs comprennent un pignon planétaire ou pignon central (appelé solaire), une couronne extérieure (ou planétaire extérieure) et des pignons satellites (appelés satellites) qui sont montés sur un porte-satellites et qui sont en prise avec le solaire et avec la couronne.

L'un de ces composants doit être bloqué en rotation pour le fonctionnement du train d'engrenages.

Lorsque le porte-satellites est fixe en rotation, le solaire et la couronne sont menants et menés, respectivement, ou inversement. Le réducteur est alors du type « à train planétaire ». Dans le cas inverse d'un réducteur à « train épicycloïdal », la couronne extérieure est fixe en rotation et le solaire et le porte-satellites sont menants et menés.

De tels réducteurs sont classiquement disposés entre une soufflante et un compresseur basse pression (BP) appartenant au corps primaire de la turbomachine. Ces réducteurs ont pour avantage d'offrir des taux de réduction importants permettant d'adapter la vitesse de la soufflante et de la turbine basse pression indépendamment, afin de pouvoir optimiser leurs utilisations.

Cependant, ce type de réducteur présente des inconvénients. Une des problématiques est liée à la bonne lubrification des dentures des pignons et des paliers. En effet, au vu des fortes puissances transitant dans ce réducteur, une mauvaise lubrification de ce dernier peut entraîner une dégradation de la performance ou une détérioration du réducteur.

Il est connu de l'art antérieur un dispositif de récupération d'huile de lubrification d'un réducteur du type à train épicycloïdal, tel que décrit dans le document WO-A1-2013/124590, comprenant des moyens de guidage et de déflexion de l'huile par centrifugation vers les engrenages du réducteur et s'étendant autour d'une couronne fixe. Ces moyens sont formés de deux gouttières symétriques de récupération de l'huile qui sont fixes, qui font le tour du réducteur et qui se terminent en un point de la circonférence par deux écopes se détournant de la gouttière pour évacuer l'huile collectée. Cette dernière est renvoyée au réservoir principal du moteur. Ce dispositif est adapté pour lubrifier uniquement un réducteur de type à train épicycloïdal et fonctionnant à haute vitesse. Il ne peut donc pas être utilisé pour couvrir les autres cas de fonctionnement, notamment lorsque la turbomachine est à l'arrêt, au démarrage ou encore lorsque l'arbre de la soufflante tourne librement à faible régime dans le sens horaire ou antihoraire (phase désignée par le terme anglais « WindMilling »). Dans le cas du WindMilling, l'arbre de soufflante tourne sous l'effet du vent, et entraine le réducteur et l'arbre de turbine de la turbomachine.

Il a été proposé, une lubrification auxiliaire du réducteur à l'arrêt ou fonctionnant à faible vitesse pour préserver les composants du réducteur. Des pompes de lubrification et de transfert du lubrifiant, peuvent être utilisées pour assurer cette fonction de lubrification auxiliaire. Cependant, elles ont pour inconvénient de nécessiter un montage compliqué et encombrant. Dans ce contexte, il est intéressant de pallier les inconvénients de l'art antérieur, en proposant une solution de lubrification d'un réducteur de vitesse couvrant notamment les cas de fonctionnement à faible vitesse, tout en préservant les composants du réducteur.

### Résumé de l'invention

L'invention propose ainsi un réducteur de vitesse pour une turbomachine, en particulier d'aéronef, comportant un solaire central monté mobile autour d'un axe X de rotation, une couronne annulaire coaxial à l'axe X et une pluralité de satellites disposés autour de l'axe X et montés mobiles sur un porte-satellites, lesdits satellites étant engrenés avec ledit solaire et la couronne annulaire qui s'étend autour des satellites, le réducteur de vitesse comprenant en outre un dispositif de récupération de lubrifiant comportant un conduit de récupération de lubrifiant éjecté par centrifugation dudit réducteur.

Le dispositif de récupération selon l'invention comprend des écopes montées de façon à pivoter suivant un axe de pivotement P sur un organe mobile du réducteur de vitesse qui tourne autour de l'axe X entre, d'une part, un état déployé lorsque l'arbre de puissance du réducteur tourne à une première vitesse prédéterminée et dans lequel chaque écope est configurée pour récupérer une portion du lubrifiant en se rapprochant du conduit, et d'autre part, un état de repos lorsque l'arbre de puissance du réducteur tourne à une seconde vitesse prédéterminée supérieure à ladite première vitesse prédéterminée.

Selon l'invention, l'organe mobile est la couronne annulaire.

Ainsi, cette solution permet d'atteindre l'objectif susmentionné. L'invention propose d'intégrer un dispositif de lubrification comportant des écopes mobiles et montées sur l'organe mobile. Ces écopes sont déployées, en particulier à faible vitesse, pour récupérer le lubrifiant stagnant en bas du conduit de récupération et pour renvoyer le lubrifiant, du fait de la gravité, en haut du réducteur afin de redistribuer le lubrifiant collecté aux engrenages du même réducteur. A haute vitesse, ces écopes mobiles sont au repos (c'est-à-dire non fonctionnelles) et ne freinent la circulation du lubrifiant (pas de barattage notamment) dans le conduit de récupération. Ce dispositif de lubrification auxiliaire passive du réducteur de vitesse est particulièrement adaptée pour les régimes à faibles vitesses (tels que les phases de WindMilling, à l'arrêt ou au démarrage), régimes pour lesquels les besoins en huile sont relativement faibles, soient environ 100 litres par heure. Ce dispositif de lubrification permet également de se dispenser d'un générateur ou d'une pompe supplémentaire dans la turbomachine. Ce réducteur de vitesse permet d'améliorer, de manière simple et efficace, la lubrification au sein du réducteur de vitesse fonctionnant à faible régime et à haute régime tout en évitant d'encombrer ledit réducteur.

Les pignons des satellites, de la couronne, et du solaire forment les engrenages du réducteur.

Selon une autre particularité, le réducteur de vitesse est à train planétaire, et en ce que le porte-satellite est fixe.

Selon une autre particularité, ledit dispositif de récupération comprend une gouttière qui s'étend radialement à l'extérieur et au moins en partie autour de la couronne, ledit conduit étant porté par la gouttière et s'étendant au moins en partie circonférentiellement autour de l'axe X.

Suivant une autre caractéristique, ledit conduit est en communication fluidique avec la gouttière au niveau d'une première position située sensiblement en bas du réducteur et éloignée de l'axe X du réducteur de manière à stocker du lubrifiant.

Dans la présente demande, la rotation des écopes autour de l'axe X est comparable à la rotation en sens inverse des aiguilles d'une montre. Ainsi, avantageusement, chaque écope est configurée pour tourner autour de l'axe X d'une première position (équivalente à 6 heure) située sensiblement en bas du réducteur et éloignée du solaire central, vers une troisième position (équivalente à 3 heure) et éloignée du solaire, puis vers une seconde position (équivalente à 12 heure) située sensiblement en haut du réducteur et à l'opposée de ladite première position, et enfin vers une quatrième position (équivalente à 9 heure) opposée de ladite troisième position.

Selon une autre particularité, le dispositif de récupération comprend en outre au moins un canal d'acheminement du lubrifiant qui est porté par le porte-satellites et qui s'étend, au moins en partie circonférentiellement autour de l'axe X, entre une seconde position opposée à ladite première position et une troisième position disposée entre ladite première et seconde positions, ledit canal étant destiné à recevoir le lubrifiant des écopes et débouche sensiblement vers les engrenages du réducteur.

Selon une autre particularité, le canal d'acheminement du lubrifiant s'étend, au moins en partie circonférentiellement autour de l'axe X, entre ladite première position et ladite seconde position.

Selon une autre particularité, dans son état déployé chaque écope est configurée, d'une part, pour récupérer le lubrifiant dudit conduit de la première position, et d'autre part, pour réacheminer le lubrifiant récupérée dans le canal d'acheminement tout au long de la troisième position, vers la seconde position.

Selon une autre particularité, ledit canal comprend un organe de distribution comportant un injecteur qui est disposé sensiblement au niveau de ladite troisième position située sensiblement en aval du réducteur et éloignée du solaire, l'injecteur étant configuré pour injecter le lubrifiant s'écoulant dans le canal et rejeté par les écopes vers les engrenages du réducteur.

Selon une autre particularité, chaque écope comprend un organe d'équilibrage configuré pour faire basculer l'écope de l'état déployé vers l'état de repos ou inversement sous l'action d'une force centrifuge engendrée lors de la rotation de l'axe X.

Selon un autre caractéristique, chaque écope comprend un organe de rappel configuré pour maintenir l'écope dans son état déployé.

Dans cette configuration, l'organe d'équilibrage est configuré pour faire basculer l'écope de l'état déployé vers l'état de repos lorsque la couronne tourne à la seconde vitesse prédéterminée (soit à une vitesse supérieure à 1000 rpm). Lorsque la couronne tourne à faible vitesse, l'organe de rappel est configuré donc pour ramener l'écope de l'état de repos à l'état déployé. Selon une autre particularité, la couronne présente une bride qui s'étend radialement vers l'extérieur, et chaque écope est montée mobile sur la bride par une pièce de raccord comprenant une ouverture dans laquelle s'insère l'écope.

Selon une autre particularité, le conduit de récupération de lubrifiant s'étend suivant l'axe X d'un côté d'un plan passant par la bride et perpendiculaire à l'axe X.

Selon une autre particularité, les écopes sont agencées radialement à l'extérieur du canal d'acheminement du lubrifiant.

Selon une autre particularité, ledit organe d'équilibrage de l'écope s'étend radialement vers l'extérieur de l'ouverture de ladite pièce lorsque l'écope est dans son état de repos, et l'organe d'équilibrage de l'écope s'étend radialement vers l'intérieur de l'ouverture de ladite pièce lorsque l'écope est dans son état déployé.

L'invention porte également sur un ensemble contenant un arbre de soufflante s'étendant suivant un axe X de rotation, un arbre de puissance, tel qu'un arbre basse pression, s'étendant suivant l'axe X et destiné à entrainer en rotation l'arbre de soufflante suivant l'axe X, et un réducteur de vitesse selon une des particularités susmentionnées , qui est monté entre l'arbre de soufflante et l'arbre de puissance, l'arbre de puissance étant relié au solaire central et la couronne étant couplée à l'arbre de soufflante.

L'invention porte encore sur une turbomachine, en particulier d'aéronef, double flux comprenant un ensemble comprenant un réducteur de vitesse selon l'invention.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'une turbomachine comprenant un module de soufflante utilisant l'invention ;
[Fig.2] la figure 2 est une demi vue schématique en coupe axiale d'un réducteur de vitesse selon l'invention ;
[Fig.3] la figure 3 est une vue schématique partielle en perspective d'un exemple de réducteur à train planétaire, selon un mode de réalisation de l'invention ;
[Fig.4] la figure 4 est une vue schématique de face du réducteur de la figure 3 ;
[Fig.5] la figure 5 est une vue schématique partielle en perspective d'un canal d'acheminement du lubrifiant du réducteur de la figure 3 ;
[Fig. 6a] la figure 6a est une vue schématique partielle en perspective d'un conduit de récupération du lubrifiant du réducteur de la figure 3 ;
[Fig. 6b] la figure 6b est une vue schématique partielle de côté du conduit de la figure 6a ;
[Fig.7a] la figure 7a est une vue schématique partielle en perspective de l'écope du réducteur de la figure 3 ;
[Fig. 7b] la figure 7b est une vue schématique de face de l'écope du réducteur illustrée sur la figure 7a ;
[Fig. 7c] la figure 7c est une vue schématique de dessus de l'écope du réducteur montée sur une pièce de raccord et qui illustrée sur la figure 7a ou la figure 7b.

### Description détaillée de l'invention

Par convention dans la présente demande, les termes « intérieur » et « extérieur », et « interne » et « externe » sont définis radialement par rapport à l'axe X du moteur d'aéronef. Ainsi, un cylindre s'étendant selon l'axe X du moteur comporte une face intérieure tournée vers l'axe du moteur et une surface extérieure, opposée à sa surface intérieure. On entend par « axial » ou « axialement » toute direction parallèle à l'axe X, et par « transversalement » ou « transversal » toute direction perpendiculaire à l'axe X. De même, les termes « amont » et « aval » sont définis par rapport au sens de circulation de l'air dans la turbomachine.

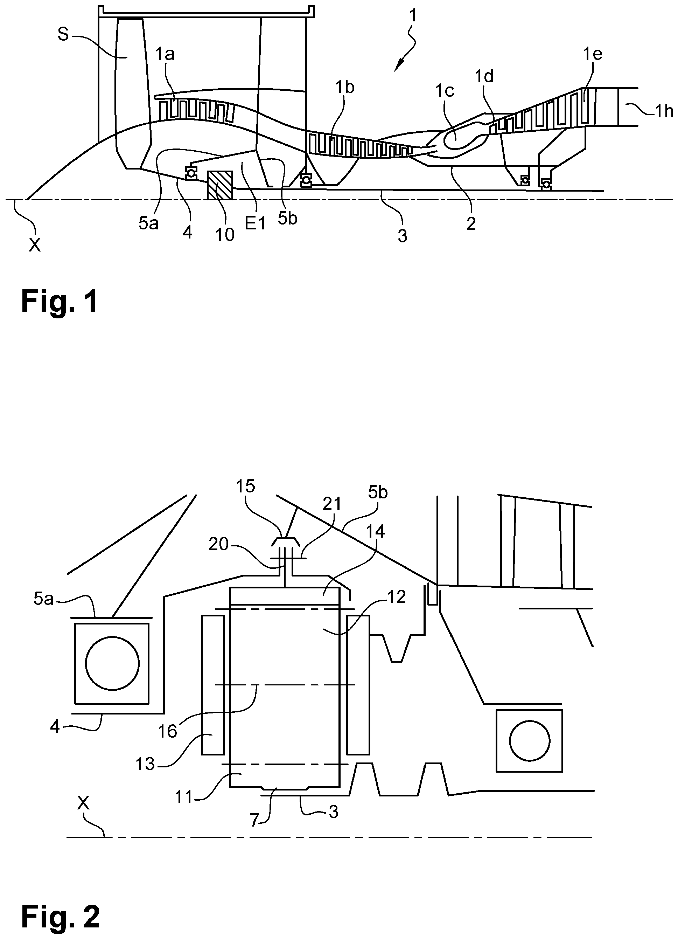

La figure 1 montre une turbomachine 1 qui comporte, de manière classique, une hélice ou une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est couplé à l'arbre BP 3 au moyen d'un réducteur de vitesse 10. Dans cet exemple de réalisation, le réducteur 10 est de type « à train planétaire » représenté ici de façon schématique.

Le réducteur 10 est positionné dans une partie avant de la turbomachine . Une structure fixe de la turbomachine comportant schématiquement, ici, une partie amont 5a et une partie aval 5b est agencée de manière à former une enceinte E1 entourant le réducteur 10.

Cette enceinte E1 peut être fermée en amont par de joints d'étanchéité au niveau d'un palier permettant la traversée de l'arbre de soufflante 4, et en aval par des joints d'étanchéité au niveau de la traversée de l'arbre BP 3. La figure 2, montre le positionnement du réducteur 10 qui comprend un solaire central 11, une couronne annulaire 14 extérieure, une pluralité de satellites 12 montés sur un porte-satellites 13. Dans le cas du réducteur 10 à train planétaire, le porte-satellites 13 est statique pour le fonctionnement du train d'engrenages. La couronne 14 est mobile et fixée sur l'arbre soufflante 4 de la partie amont 5a de la structure fixe, au niveau de ces brides de fixation 20. La couronne 14 est en effet réalisée en deux parties pour permettre la mise en place de tous les éléments constituant le réducteur. Ces deux parties sont attachées l'une à l'autre par une série de boulons d'assemblage 21, au niveau de la bride 20 qui s'étend radialement vers l'extérieur à partir de la couronne 14. Cette bride 20 peut permettre la fixation d'un capot de protection. Ce capot de protection s'étend au moins en partie circonférentiellement et en aval de la bride 20 de la couronne 14, de sorte à empêcher la projection du lubrifiant vers la partie aval 5b de la structure fixe. Le réducteur 10 embraye, d'une part, sur des cannelures 7 de l'arbre BP 3 par l'intermédiaire des pignons d'engrenage du solaire 11 du train planétaire, et d'autre part, sur l'arbre soufflante 4 qui est rattaché à la couronne 14 de ce même train planétaire. Classiquement, le solaire 11, dont l'axe de rotation X est confondu ici avec celui de la turbomachine, entraîne une série de pignons de satellites ou satellites 12, qui sont répartis régulièrement sur la circonférence du réducteur 10. Le nombre de satellites 12 est généralement défini entre trois et sept. Les satellites 12 tournent autour de leurs axes de révolution et en engrenant sur des dentures internes de la couronne 14. Chacun des satellites 12 tourne librement autour d'un axe de satellite 16 relié à un porte-satellites 13 fixe. La rotation des satellites 12 autour de leur axe de satellite 16, du fait de la coopération de leurs pignons avec les dentures internes de la couronne 14, entraîne la rotation de la couronne 14 autour de l'axe X, alors que le porte-satellites 13 reste immobile. La rotation de la couronne 14 entraîne également celle de l'arbre soufflante 4 qui lui est lié, à une vitesse de rotation qui est inférieure à celle de l'arbre BP 3.

Suivant un exemple de réalisation, le maintien des satellites 12 par le porte-satellites 13 est assuré par une série de doigts de centrage (non-représenté), répartis régulièrement sur la circonférence du porte-satellites et qui peuvent s'étendre radialement autour du solaire. Il existe bien entendu d'autres technologies pour maintenir les satellites sur le portes-satellites.

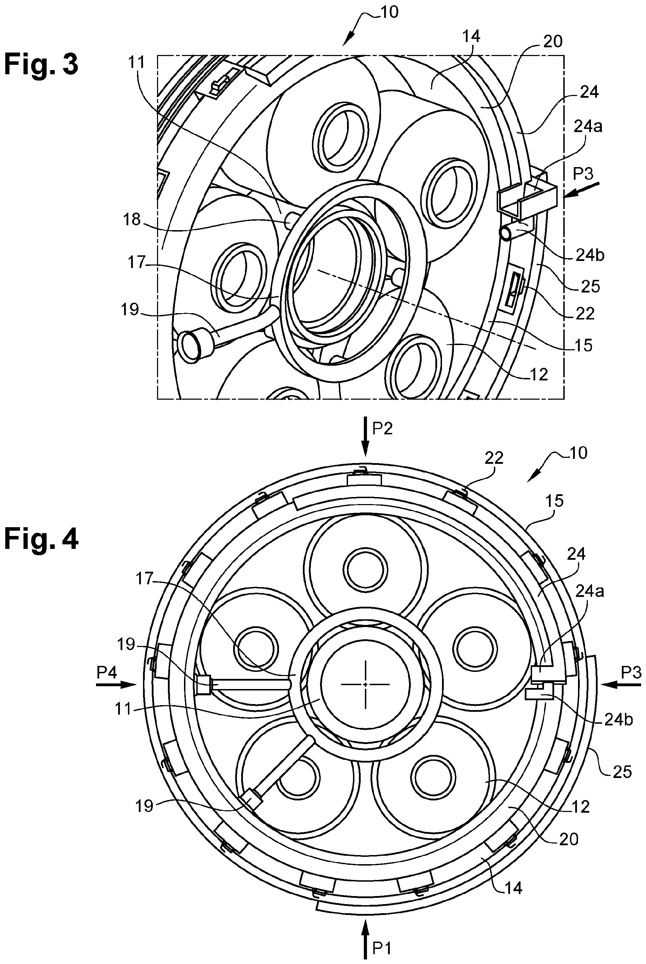

Les figures 3 et 4 montrent un réducteur 10 à train planétaire comprenant un dispositif d'alimentation de lubrifiant 17 (qui est généralement de l'huile) qui peut être configuré pour former un circuit principal de lubrification du réducteur 10. Ce dispositif 17 a une forme générale d'un tube circulaire 17 s'étendant autour du solaire 11 et formant une canalisation d'alimentation de lubrifiant. Le tube circulaire 17 du dispositif comprend au moins un tuyau 19 se terminant par une extrémité ouverte permettant le raccordement à une source d'alimentation en lubrifiant. De préférence, le dispositif d'alimentation comprend deux tuyaux 19 qui sont raccordés au tube circulaire 17, tel que représenté par exemple sur la figure 4. Ce tube 17 comprend en outre des canules 18 disposées au niveau des satellites 12 pour lubrifier les engrenages sur toute la circonférence du réducteur. De préférence, les canules 18 sont en nombre égal à celui des satellites 12.

Dans le cas d'un fonctionnement à haute vitesse de la turbomachine (c'est-à-dire le cas du circuit principal de lubrification), le tube circulaire 17 est configuré pour amener le lubrifiant sous pression au niveau des canules 18 (non représentés), de sorte à lubrifier les engrenages entre le solaire 11 et les satellites 12 et entre les satellites 12 et la couronne14. De même , le lubrifiant sous pression arrive au centre de chacun des satellites 12, de sorte à lubrifier les paliers de chaque satellite 12.

Le réducteur de vitesse comprend un dispositif de récupération de l'huile éjectée par centrifugation. Le dispositif de récupération comprend une gouttière 15 de recueil du lubrifiant qui est disposée autour de la couronne 14. La gouttière est reliée à la partie amont 5a de la structure fixe de la turbomachine. La rotation de la couronne 14 permet d'éjecter le lubrifiant par centrifugation vers la gouttière 15. Cette gouttière 15 a une forme générale annulaire de recueil du lubrifiant. Un espace radial est laissé circonférentiellement entre la couronne 14 et la gouttière 15 pour permettre notamment la projection et la circulation du lubrifiant par centrifugation. La gouttière est disposée radialement en regard de la bride 20.

Dans le cas d'un fonctionnement dans une première vitesse prédéterminée, c'est-à-dire à faible vitesse (par exemple, à la vitesse maximale en WindMilling d'environ 1000 rpm), en arrêt ou au démarrage de la turbomachine, classiquement, le lubrifiant s'accumule et stagne dans un fond de la gouttière, représentant une première position P1 du réducteur. Ainsi, comme décrit précédemment dans l'arrière-plan technique, le circuit principal de lubrification (fonctionnant notamment à haute vitesse) ne permet pas de lubrifier les composants du réducteur de vitesse à faible vitesse de fonctionnement.

Sur les figures 3 et 4 le dispositif de récupération du lubrifiant (ou de lubrification auxiliaire) est adapté pour fonctionner dans le cas du fonctionnement à haute vitesse de la turbomachine (notamment lorsque l'écope est à l'état de repos), et également dans le cas du fonctionnement à faible vitesse de la turbomachine, tel qu'à l'arrêt, au démarrage et en WindMilling (notamment lorsque l'écope est à l'état déployé). Ce dispositif de récupération comprend un canal 24 d'acheminement du lubrifiant et un conduit 25 de récupération de lubrifiant formant un réservoir de recueil du lubrifiant. Ce dispositif de récupération comprend en outre des écopes 22 mobiles entre un état de repos et un état déployé.

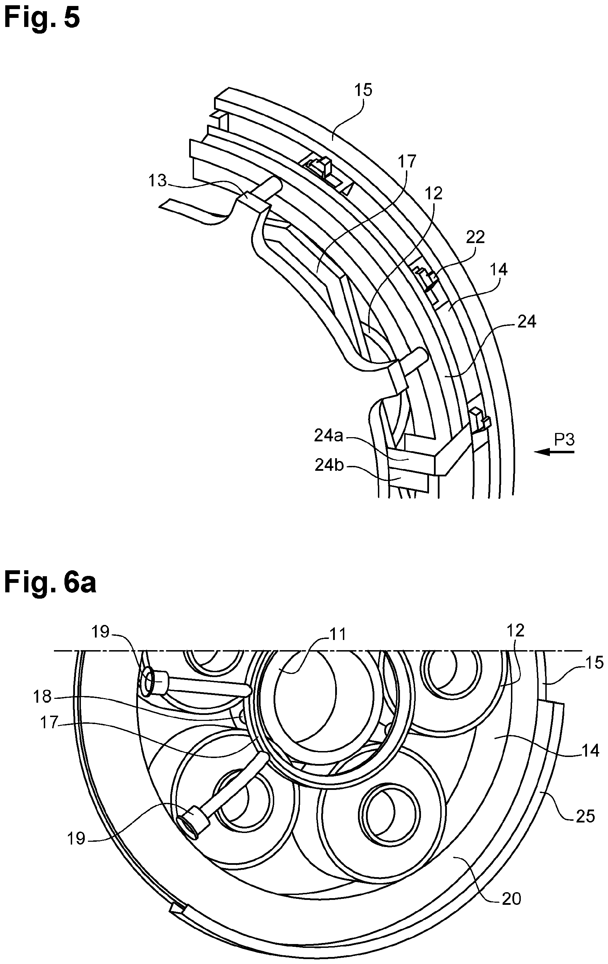

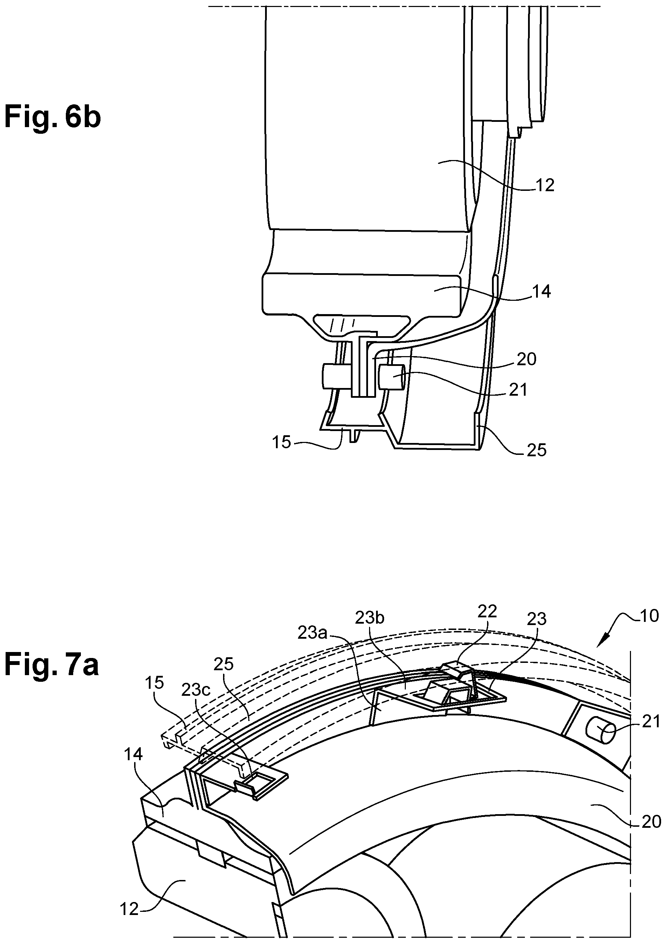

Les figures 6a et 6b représentent le conduit 25 de récupération du lubrifiant qui est porté par la gouttière 15. Le conduit peut être formé dans un seul tenant avec la gouttière ou est rapporté et fixé sur la gouttière. Le conduit est agencé dans la partie inférieure du réducteur de vitesse (soit à 6 heures). Dans l'exemple et non-limitativement, le conduit 25 a une forme générale de demi-arc qui s'étend sensiblement entre au moins une quatrième position P4 (9 heure) et une troisième position P3 (3 heure) du réducteur. L'huile sortant des engrenages et des paliers du réducteur est récupérée par la gouttière 15, puis stockée dans le conduit 25, de préférence dans la première position P1, pour pouvoir ensuite être réacheminée dans le réducteur. Comme cela est illustré sur la figure 6b, le conduit 25 s'étend axialement depuis une paroi des branches en forme de U que présente la gouttière 15. En particulier, le conduit 25 s'étend d'un côté d'un plan passant par la bride 20 de la couronne et de préférence vers l'aval du réducteur de vitesse. La gouttière 15 et le conduit 25 sont en communication fluidique, de préférence au niveau de la première position P1. Par exemple, au moins une ouverture, une encoche ou une canule est formée entre la gouttière et le conduit pour que le lubrifiant puisse s'écouler de la gouttière vers le conduit de réservoir. Ce conduit 25 s'étend au moins entre une troisième position P3 et une quatrième position P4 pour recueillir de façon optimale le lubrifiant des engrenages du réducteur. Sur la figure 4, le conduit 25 s'étend sensiblement entre la troisième position P3 (3 heure) et la première position P1 (6 heure).

Les figures 3 à 5 représentent également un exemple du canal 24 d'acheminement du lubrifiant recueilli par les écopes 22. Ce canal 24 est porté par le porte-satellites (figure 5). Celui-ci est donc fixe. Ce canal 24 a une forme générale d'un demi-arc qui s'étend sensiblement au moins en partie circonférentiellement de la couronne 14 entre la première position P1 et la deuxième position P2 du réducteur. Dans l'exemple et de manière non-limitative, le canal 24 s'étend sensiblement entre la seconde position P2 (12 heure) et la troisième position P3 (3 heure). Ainsi, le lubrifiant récupéré par les écopes 22 du conduit 25 est ré-injecté ou versé sur toute la longueur circonférentielle du canal 24. Le lubrifiant s'écoule dans le canal 24 pour déboucher dans un organe de distribution 24a dont l'extrémité calibrée est resserrée pour former un injecteur 24b. Le lubrifiant sort de l'injecteur 24b, par exemple sous la forme d'un écoulement sans pression du lubrifiant ou d'un jet, qui est orienté vers les satellites 12 et/ou solaire 11, tel qu'illustré sur la figure 3.

Les figures 7a à 7c illustrent des écopes 22 du dispositif de récupération du lubrifiant. Ces écopes sont reliées au niveau de la bride 20 de la couronne 14. Pour cela, une pièce de raccord 23 est montée sur la couronné 14 et reçoit au moins une écope 22. De préférence, l'écope 22 est montée mobile par l'intermédiaire d'un pivot P sur la pièce de raccord 23. Les écopes 22 peuvent être assemblées avec la pièce de raccord 23 au moyen de fixation 21, du type boulon 21, sur la bride 20 de la couronne 14. La pièce de raccord 23 a une forme générale en L dont une première partie 23a s'étendant radialement est fixée sur la bride 20 et une seconde partie 23b s'étendant axialement de la bride 20. Cette seconde partie 23b comprend une ouverture 23c dans laquelle au moins une écope 22 est logée.

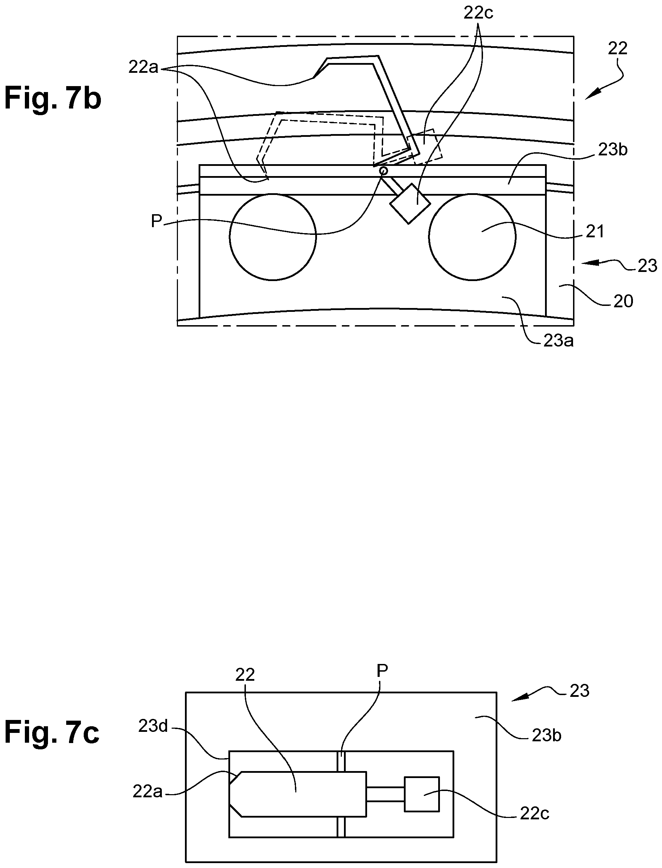

Sur les figures 7b et 7c, chaque écope 22 comprend une première portion 22a ayant une forme générale creuse pour pouvoir contenir le lubrifiant récupéré en fond du conduit 25. Cette première portion 22a comprend une extrémité sensiblement courbée formant une butée au niveau d'une bordure 23d de l'ouverture 23c de la pièce 23. Ceci permet de limiter le basculement de l'écope jusqu'à l'ouverture de la pièce de raccord. L'écope comprend un axe P de pivot disposé sensiblement entre la première 22a portion et une seconde portion qui est opposée à cette première portion 22a. Cette écope 22 peut comprendre un moyen de rappel (non-représenté) permettant son état déployé. Par exemple et non limitativement, un moyen de rappel de l'écope est un ressort. L'écope 22 peut comprendre en outre un organe d'équilibrage 22c, situé sensiblement au niveau de la seconde extrémité, qui contrebalance l'effort de rappel du moyen de rappel. Par exemple et non limitativement, un organe d'équilibrage 22c est une masselotte ou un contrepoids ou tout autre organe permettant à l'écope de basculer entre ces deux états de repos et de déploiement.

En fonctionnement à haute vitesse de la turbomachine (soit supérieure à 1000 rpm), les écopes 22 sont basculées dans un état de repos, dans lequel chaque écope 22 est inclinée en direction de la couronne 14. En particulier, l'extrémité en butée de la première portion 22a de l'écope 22 se trouve dans une direction générale sensiblement parallèle à la deuxième partie 22b de la pièce de raccord 23. Dans l'état de repos, les écopes 22a laissent circuler le lubrifiant par centrifugation dans le conduit 25 et le long de celui-ci pour évacuer le lubrifiant éjecté par les engrenages du réducteur. En effet, l'organe d'équilibrage 22c s'étend radialement vers l'extérieur de la seconde partie 23b de la pièce de raccord 23, de sorte à exercer un effort centrifuge permettant d'incliner l'écope 22 dans son état de repos lorsque la turbomachine fonctionne à haute vitesse.

En fonctionnement à faible vitesse ou sans vitesse de fonctionnement de la turbomachine (inférieure ou égale à 1000 rpm), les écopes 22 mobiles sont basculées dans un état de déploiement, de manière que chaque écope 22 soit redressée en direction de la gouttière 15. En particulier, l'extrémité en butée de la première portion 22a de l'écope 22 se trouve à distance de l'ouverture 23c de la pièce de raccord 23. Cette première portion 22a s'étend sensiblement transversalement par rapport à la seconde partie 23b de la pièce 23. En effet, dans cet état de déploiement, l'organe d'équilibrage 22c s'étend vers l'intérieur de la pièce de raccord 23 pour redresser l'écope 22. Le moyen de rappel maintien l'écope dans cette position déployée. Dans cet état, les écopes 22 récupèrent le lubrifiant de la première position P1 du conduit 25, pour la réintroduire par gravité dans le canal 24, entre la première position P1 et la troisième position P3, et de préférence entre la position P3 et la position P2 (suivant le sens de rotation de la couronne ici). En effet, le lubrifiant est évacué des engrenages du réducteur vers le conduit 25 de réservoir, du fait d'un fonctionnement en circuit fermé pour l'huile de lubrification dans le réducteur, pour que les écopes prélèvent le lubrifiant dans le fond du conduit. L'arbre soufflante 4 tournant à faible vitesse, par exemple sous l'effet du vent, la couronne 14 est amenée également à tourner. Ce qui peut entraîner également la réintroduction du lubrifiant par les écopes 22.

La configuration des écopes sur un organe tournant ou mobile du réducteur de vitesse apporte plusieurs avantages qui sont, notamment de :
- optimiser la lubrification du réducteur à train planétaire en couvrant tous les cas de fonctionnement de la turbomachine (à faible vitesse, à l'arrêt, au démarrage et en WindMilling) ;
- réacheminer l'huile dans le même réducteur à train planétaire ;
- simplifier et désencombrer l'assemblage et le fonctionnement du réducteur à train planétaire ; et
- s'adapter facilement aux réducteurs à trains planétaires actuels.

Cette solution proposée est simple, efficace et économique à réaliser et à assembler sur une turbomachine, tout en assurant une lubrification et une durée de vie optimales du réducteur de vitesse.

## Revendications

1. Réducteur de vitesse pour une turbomachine, en particulier d'aéronef, comportant un solaire central (11) monté solidaire en rotation sur un arbre de puissance autour d'un axe X de rotation, une couronne annulaire (14) coaxial à l'axe X et une pluralité de satellites (12) disposés autour de l'axe X et montés mobiles sur un porte-satellites (13), lesdits satellites (12) étant engrenés avec ledit solaire et la couronne annulaire (14) qui s'étend autour des satellites (12), le réducteur de vitesse comprenant en outre un dispositif de récupération de lubrifiant comportant un conduit (25) de récupération de lubrifiant éjecté par centrifugation dudit réducteur, ledit dispositif de récupération comprend des écopes (22) montées de façon à pivoter suivant un axe de pivotement P sur un organe mobile du réducteur de vitesse qui tourne autour de l'axe X entre, d'une part, un état déployé lorsque l'arbre de puissance tourne à une première vitesse prédéterminée (V1) et dans lequel chaque écope (22) est configurée pour récupérer une portion du lubrifiant en se rapprochant du conduit (25), et d'autre part, un état de repos lorsque l'arbre de puissance réducteur tourne à une seconde vitesse prédéterminée (V2) supérieure à ladite première vitesse prédéterminée (V1), et ledit réducteur étant **caractérisé en ce que** ledit organe mobile est la couronne annulaire (14).

2. Réducteur selon la revendication 1, **caractérisé en ce que** le réducteur de vitesse est à train planétaire, et **en ce que** le porte-satellite (13) est fixe.

3. Réducteur selon la revendication 1 ou 2, **caractérisé en ce que** ledit dispositif de récupération comprend une gouttière (15) qui s'étend radialement à l'extérieur et au moins en partie autour de la couronne (14), ledit conduit (25) étant porté par la gouttière (15) et s'étend au moins en partie circonférentiellement autour de l'axe X.

4. Réducteur selon la revendication précédente, **caractérisé en ce que** ledit conduit (25) est en communication fluidique avec la gouttière (15) au niveau d'une première position (P1) située sensiblement en bas du réducteur et éloignée de l'axe X du réducteur.

5. Réducteur selon la revendication 4, **caractérisé en ce que** le dispositif de récupération comprend en outre au moins un canal d'acheminement (24) du lubrifiant qui est porté par le porte-satellites et qui s'étend, au moins en partie circonférentiellement autour de l'axe X, entre une deuxième position (P2) opposée à ladite première position (P1) et une troisième position (P3) disposée entre lesdites première et deuxième positions (P1, P2), ledit canal (24) étant destiné à recevoir le lubrifiant des écopes (22) et débouche sensiblement vers les engrenages du réducteur.

6. Réducteur selon la revendication 5, **caractérisé en ce que** le canal d'acheminement (24) du lubrifiant s'étend, au moins en partie circonférentiellement autour de l'axe, entre ladite première position (P1) et ladite seconde position (P2).

7. Réducteur selon la revendication 5 ou 6, **caractérisé en ce que** dans son état déployé chaque écope (22) est configurée, d'une part, pour récupérer le lubrifiant dudit conduit (25) de la première position (P1), et d'autre part, pour réacheminer le lubrifiant récupérée dans le canal d'acheminement (24) tout au long de la troisième position (P3), vers la seconde position (P2).

8. Réducteur selon une des revendications 5 à 7, **caractérisé en ce que** ledit canal (24) comprend un organe de distribution (24a) comportant un injecteur (24b) et disposé sensiblement au niveau de la troisième position (P3) et éloignée de l'axe X, l'injecteur (24b) étant configuré pour injecter le lubrifiant s'écoulant dans le canal (24) et rejeté par les écopes (22) vers les engrenages du réducteur.

9. Réducteur selon une des revendications 1 à 8, **caractérisé en ce que** chaque écope (22) comprend un organe d'équilibrage (22c) configuré pour faire basculer l'écope de l'état déployé vers l'état de repos ou inversement sous l'action de la force centrifuge engendrée lors de la rotation de l'axe X, et un organe de rappel configuré pour maintenir l'écope dans son état déployé.

10. Réducteur selon une des revendications 1 à 9, **caractérisé en ce que** la couronne (14) présente une bride (20) qui s'étend radialement vers l'extérieur, et chaque écope (22) est montée mobile sur la bride (20) par une pièce de raccord (23) comprenant une ouverture dans laquelle s'insère l'écope (22).

11. Réducteur selon la revendication 10, **caractérisé en ce que** ledit organe d'équilibrage (22c) de l'écope (22) s'étend radialement vers l'extérieur de l'ouverture de ladite pièce (23) lorsque l'écope (22a) est dans son état de repos, et l'organe d'équilibrage (22c) de l'écope (22) s'étend radialement vers l'intérieur de l'ouverture de ladite pièce (23) lorsque l'écope (22b) est dans son état déployé.

12. Ensemble contenant un arbre de soufflante s'étendant suivant un axe X de rotation, un arbre de puissance s'étendant suivant l'axe X et destiné à entraîner en rotation l'arbre de soufflante suivant l'axe X, et un réducteur de vitesse selon une des revendications 1 à 11, monté entre l'arbre de soufflante et l'arbre de puissance, l'arbre de puissance étant relié au solaire central et la couronne étant couplée à l'arbre de soufflante.

13. Turbomachine, en particulier d'aéronef, double flux comprenant un ensemble selon la revendication 12.

## Patentansprüche

1. Untersetzungsgetriebe für einer Turbomaschine, insbesondere eines Luftfahrzeugs, umfassend ein zentrales Sonnenrad (11), das auf einer Leistungswelle drehfest um eine Rotationsachse X herum montiert ist, ein zu der Achse X koaxiales ringförmiges Hohlrad (14) und eine Vielzahl von um die Achse X herum angeordneten und auf einem Planetenträger (13) beweglich montierten Satelliten (12), wobei die Satelliten (12) mit dem Sonnenrad und dem ringförmigen Hohlrad (14), das sich um die Satelliten (12) herum erstreckt, in Eingriff vorliegen, wobei das Untersetzungsgetriebe weiter eine Vorrichtung zur Rückgewinnung von Schmiermittel umfasst, die eine Leitung (25) zur Rückgewinnung des durch Zentrifugation des Getriebes ausgestoßenen Schmiermittels beinhaltet,
wobei die Vorrichtung zur Rückgewinnung Schöpfgefäße (22) umfasst, die auf schwenkbare Weise entlang einer Schwenkachse P auf einem beweglichen Bauteil des Untersetzungsgetriebes montiert sind, das sich zwischen einem entfalteten Zustand einerseits, wenn sich die Leistungswelle bei einer ersten vorbestimmten Geschwindigkeit (V1) dreht, und wobei jedes Schöpfgefäß (22) konfiguriert ist, um einen Anteil des Schmiermittels zurückzugewinnen, indem es sich der Leitung (25) nähert, und einem Leerlaufzustand andererseits um die Achse X herum dreht, wenn die Leistungswelle des Getriebes sich bei einer zweiten vorbestimmten Geschwindigkeit (V2) dreht, die höher als die erste vorbestimmte Geschwindigkeit (V1) ist, und wobei das Getriebe **dadurch gekennzeichnet ist, dass** das bewegliche Bauteil des ringförmigen Hohlrads (14) ist.

2. Getriebe nach Anspruch 1, **dadurch gekennzeichnet, dass** Untersetzungsgetriebe ein Planetengetriebe ist, und dadurch, dass der Planetenträger (13) fest ist.

3. Getriebe nach Anspruch 1 oder 2, **dadurch gekennzeichnet, dass** die Vorrichtung zur Rückgewinnung eine Rinne (15) umfasst, die sich radial zur Außenseite und mindestens zum Teil um das Hohlrad (14) herum erstreckt, wobei die Leitung (25) von der Rinne (15) getragen wird und sich mindestens zum Teil in Umfangsrichtung um die Achse X herum erstreckt.

4. Getriebe nach einem der vorstehenden Ansprüche, **dadurch gekennzeichnet, dass** die Leitung (25) auf Höhe einer ersten Position (P1), die sich im Wesentlichen unten an dem Getriebe und von der Achse X des Getriebes entfernt befindet, in Fluidverbindung mit der Rinne (15) vorliegt.

5. Getriebe nach Anspruch 4, **dadurch gekennzeichnet, dass** die Vorrichtung zur Rückgewinnung weiter mindestens einen Beförderungskanal (24) des Schmiermittels umfasst, der durch den Satelittenträger getragen wird und der sich mindestens zum Teil zwischen einer zweiten Position (P2) gegenüber der ersten Position (P1) und einer dritten Position (P3), angeordnet zwischen der ersten und zweiten Position (P1, P2) in Umfangsrichtung um die Achse X herum erstreckt, wobei der Kanal (24) dazu bestimmt ist, das Schmiermittel der Schöpfgefäße (22) aufzunehmen und im Wesentlichen in Richtung der Zahnräder des Getriebes mündet.

6. Getriebe nach Anspruch 5, **dadurch gekennzeichnet, dass** der Beförderungskanal (24) des Schmiermittels sich mindestens zum Teil zwischen der ersten Position (P1) und der zweiten Position (P2) in Umfangsrichtung um die Achse herum erstreckt.

7. Getriebe nach Anspruch 5 oder 6, **dadurch gekennzeichnet, dass** in seinem entfalteten Zustand jedes Schöpfgefäß (22) einerseits zum Rückgewinnen des Schmiermittels der Leitung (25) der ersten Position (P1), und andererseits zum Rückführen der zurückgewonnenen Schmiermittels in dem Beförderungskanal (24) längs der dritten Position (P3) in Richtung der zweiten Position (P2) konfiguriert ist.

8. Getriebe nach einem der Ansprüche 5 bis 7, **dadurch gekennzeichnet, dass** der Kanal (24) ein Verteilungsbauteil (24a) umfasst, das einen Injektor (24b) beinhaltet und im Wesentlichen auf Höhe der dritten Position (P3) angeordnet und von der Achse X entfernt vorliegt, wobei der Injektor (24b) konfiguriert ist, um das Schmiermittel, das in dem Kanal (24) fließt und von den Schöpfgefäßen (22) zurückgeworfen wurde, in Richtung der Zahnräder des Getriebes zu injizieren.

9. Getriebe nach einem der Ansprüche 1 bis 8, **dadurch gekennzeichnet, dass** jedes Schöpfgefäß (22) ein Auswuchtungsbauteil (22c), konfiguriert, um das Schöpfgefäß von dem entfalteten Zustand in Richtung des Leerlaufzustands oder umgekehrt unter der Wirkung der hervorgerufenen Zentrifugalkraft bei der Rotation der Achse X zu kippen, und ein Rückstellbauteil umfasst, konfiguriert, um das Schöpfgefäß in seinem entfalteten Zustand zu halten.

10. Getriebe nach einem der Ansprüche 1 bis 9, **dadurch gekennzeichnet, dass** das Hohlrad (14) einen Flansch (20) aufweist, der sich radial zur Außenseite erstreckt, und jedes Schöpfgefäß (22) durch ein Verbindungsstück (23), umfassend eine Öffnung, in die das Schöpfgefäß (22) eingesetzt wird, beweglich auf dem Flansch (20) montiert ist.

11. Getriebe nach Anspruch 10, **dadurch gekennzeichnet, dass** das Auswuchtungsbauteil (22c) des Schöpfgefäßes (22) sich radial in Richtung der Außenseite der Öffnung des Stücks (23) erstreckt, wenn das Schöpfgefäß (22a) in seinem Leerlaufzustand vorliegt, und das Auswuchtungsbauteil (22c) des Schöpfgefäßes (22) sich radial in Richtung der Innenseite der Öffnung des Stücks (23) erstreckt, wenn das Schöpfgefäß (22b) in seinem entfalteten Zustand vorliegt.

12. Baugruppe, enthaltend eine Gebläsewelle, die sich um eine Rotationsachse X herum erstreckt, eine Leistungswelle, die sich entlang der Achse X erstreckt und dazu bestimmt ist, die Gebläsewelle entlang der Achse X in Rotation zu versetzen, und ein Untersetzungsgetriebe nach einem der Ansprüche 1 bis 11, montiert zwischen der Gebläsewelle und der Leistungswelle, wobei die Leistungswelle mit dem zentralen Sonnenrad verbunden ist und das Hohlrad mit der Gebläsewelle gekoppelt ist.

13. Turbomaschine, insbesondere eines Luftfahrzeugs, mit doppeltem Strom, umfassend eine Baugruppe nach Anspruch 12.

## Claims

1. A speed reducer of a turbomachine, in particular of an aircraft, comprising a central sun gear (11) mounted so as to rotate integrally on a power shaft around an axis X of rotation, an annular ring gear (14) coaxial with the axis X, and a plurality of planet gears (12) arranged around the axis X and mounted so as to be movable on a planet carrier (13), said planet gears (12) being engaged with said sun gear and the annular ring gear (14) which extends around the planet gears (12), the speed reducer further comprising a lubricant recovery device comprising a recovering pipe (25) of lubricant discharged by centrifugation from said reducer,
said recovery device comprises scoops (22) mounted so as to pivot about a pivot axis P on a movable member of the speed reducer which rotates around the axis X between, on the one hand, a deployed state when the power shaft rotates at a first predetermined speed (V1) and in which each scoop (22) is configured to recover a portion of the lubricant by moving toward the pipe (25), and on the other hand, a rest state when the power shaft of the reducer rotates at a second predetermined speed (V2) greater than said first predetermined speed (V1), and said reducer being **characterized in that** said movable member is the annular ring gear (14).

2. The reducer according to claim 1, **characterized in that** the speed reducer is a planetary gear, and **in that** the planet carrier (13) is stationary.

3. The reducer according to claim 1 or 2, **characterized in that** said recovery device comprises a gutter (15) which extends radially outwards and at least partly around the ring gear (14), said pipe (25) being carried by the gutter (15) and extending at least partly circumferentially around the axis X.

4. The reducer according to the preceding claim, **characterized in that** said pipe (25) is in fluid communication with the gutter (15) at the level of a first position (P1) situated substantially at the bottom of the reducer and remote from the axis X of the reducer.

5. The reducer according to claim 4, **characterized in that** the recovery device further comprises at least one delivering channel (24) of the lubricant which is carried by the planet carrier and which extends, at least partly, circumferentially around the axis X between a second position (P2) opposite said first position (P1) and a third position (P3) arranged between said first and second positions (P1, P2), said channel (24) being intended to receive the lubricant from the scoops (22) and opens substantially to the gears of the reducer.

6. The reducer according to claim 5, **characterized in that** the delivery channel (24) of the lubricant extends, at least partly circumferentially around the axis, between said first position (P1) and said second position (P2).

7. The reducer according to claim 5 or 6, **characterized in that** in its deployed state each scoop (22) is configured, on the one hand, to recover the lubricant from said pipe (25) from the first position (P1), and on the other hand, to redirect the recovered lubricant in the delivery channel (24) throughout the third position (P3), towards the second position (P2).

8. The reducer according to one of claims 5 to 7, **characterized in that** said channel (24) comprises a distribution member (24a) comprising an injector (24b) and arranged substantially at the level of the third position (P3) and remote from the axis X, the injector (24b) being configured to inject the lubricant flowing in the channel (24) and discharged by the scoops (22) towards the gears of the reducer.

9. The reducer according to one of claims 1 to 8, **characterized in that** each scoop (22) comprises a balancing member (22c) configured to tilt the scoop from the deployed state to the rest state or vice versa under the action of the centrifugal force generated during the rotation of the axis X, and a return member configured to maintain the scoop in its deployed state.

10. The reducer according to one of claims 1 to 9, **characterized in that** the ring gear (14) has a flange (20) which extends radially outwards, and each scoop (22) is movably mounted on the flange (20) by of a connecting piece (23) comprising an opening into which the scoop (22) is inserted.

11. The reducer according to claim 10, **characterized in that** said balancing member (22c) of the scoop (22) extends radially outwardly of the opening of said piece (23) when the scoop (22a) is in its rest state, and the balancing member (22c) of the scoop (22) extends radially inwardly of the opening of said piece (23) when the scoop (22b) is in its deployed state.

12. An assembly containing a fan shaft extending along an axis X of rotation, a power shaft extending along the axis X and intended to rotate the fan shaft along the axis X, and a speed reducer according to one of claims 1 to 11 mounted between the fan shaft and the power shaft, the power shaft being connected to the central sun gear and the ring gear being coupled to the fan shaft.

13. A double-flow turbomachine, in particular of an aircraft, comprising an assembly as claimed in claim 12.
